# EUROPÄISCHE PATENTSCHRIFT

(11) **EP 3 912 246 B1**
(45) Veröffentlichungstag und Bekanntmachung des Hinweises auf die Patenterteilung: **14.06.2023**
(21) Anmeldenummer: 20700897.0
(22) Anmeldetag: 15.01.2020
(51) Int. Cl.: H02J 3/01, H02J 3/18, H02H 9/00

(54) **FILTERVORRICHTUNG FÜR EIN ENERGIENETZ, FILTERNETZWERK UND VERFAHREN ZUM BETRIEB EINER FILTERVORRICHTUNG**
FILTER DEVICE FOR A POWER SUPPLY SYSTEM, FILTER NETWORK, AND METHOD FOR OPERATING A FILTER DEVICE
DISPOSITIF DE FILTRAGE POUR UN RÉSEAU D'ÉNERGIE, RÉSEAU DE FILTRAGE ET PROCÉDÉ DE FONCTIONNEMENT D'UN DISPOSITIF DE FILTRAGE

(30) Priorität: 18.01.2019 DE 102019101311
(43) Veröffentlichungstag der Anmeldung: 24.11.2021
(73) Patentinhaber: Maschinenfabrik Reinhausen GmbH, 93059 Regensburg (DE)
(72) Erfinder: KRETZSCHMAR, Holger, 13589 Berlin (DE); JACOBI, Matthias, 10437 Berlin (DE)
(86) Internationale Anmeldenummer: PCT/EP2020/050896
(87) Internationale Veröffentlichungsnummer: WO 2020/148326

(56) Entgegenhaltungen:
- DE-U1-202016 100 226
- GB-A- 2 460 254
- RU-C2- 2 647 709

## Beschreibung

Die Erfindung betrifft eine Filtervorrichtung für ein Energienetz, ein Filternetzwerk sowie ein Verfahren zum Betrieb einer solchen Filtervorrichtung.

Filtervorrichtungen für Energienetze, beispielsweise passive Filterkreise, können dazu eingesetzt werden, unerwünschte Anteile, etwa Oberschwingungen oder Verzerrungen in der Netzspannung oder im Netzstrom, zu verringern. Die Filtervorrichtung weist dabei eine Resonanzfrequenz auf, welche beispielsweise näherungsweise einer Abstimmfrequenz, also einer Frequenz von zu dämpfenden Schwingungsanteilen, entspricht. Eine Leistungsaufnahme der Filtervorrichtung ist typischerweise umso größer, je näher Resonanz- und Abstimmfrequenz beieinanderliegen.

Die Saugwirkung der bekannten Filterkreise ist nicht variabel, sondern auf eine maximale Oberschwingungsbelastung ausgelegt. Somit wird in der Regel mehr Oberschwingungsstrom abgesaugt als nötig wäre um die Grenzwerte einer zulässigen Spannungsverzerrung einzuhalten. Dies führt zu unnötigen Verlusten und beschleunigter Alterung der Filterkreise.

Werden bekannte Filterkreise einem Energienetz zugeschaltet, das beispielsweise eine hohe Oberschwingungsverzerrung hat, kann es dazu kommen, dass sehr hohe Einschaltströme entstehen. Dies ist zum einen schädlich für die Netzspannungsqualität und zum anderen kann hierdurch eine Filterdrossel in die Sättigung getrieben werden. In diesem Fall verliert diese einen Großteil ihrer Induktivität und eine Resonanzfrequenz des Filterkreises kann nach oben verändert werden, was dazu führen kann, dass der Filterkreis in einem Resonanzzustand verharrt, welcher zu einem Vielfachen des Bemessungsstroms mit entsprechenden Schädigungen und erhöhter Alterung führt, wie auch zu einer erheblichen Verstärkung der Netzspannungsverzerrung. RU 2 647 709 C2 offenbart eine Filtervorrichtung, bei der Widerstände zeitweilig in Serie geschaltet werden, um den Strom während des Einschaltvorgangs zu begrenzen. DE 20 2016 100226 U1 offenbart ein Wechselstrom-Oberschwingungs-Filter, wobei einzelne Komponenten zur Anpassung der Abstimmfrequenz und/oder Impedanz des Filters selektiv aktivierbar und deaktivierbar sind.

Es ist daher eine Aufgabe der vorliegenden Erfindung, ein verbessertes Konzept zur Filterung für ein Energienetz anzugeben, durch welches Schädigungen des Filterkreises vermieden und die Lebensdauer des Filterkreises verlängert wird.

Diese Aufgabe wird durch den jeweiligen Gegenstand der unabhängigen Ansprüche gelöst. Weitere Ausführungsformen sind Gegenstand der abhängigen Ansprüche.

Das verbesserte Konzept beruht auf der Idee, beim Einschalten einer Filterstufe eine Steuerkomponente zuzuschalten, die im laufenden Betrieb von der Filterstufe getrennt wird. Dadurch wird die Resonanzfrequenz der Filterstufe nach dem Einschalten verändert.

Erfindungsgemäß wird eine Filtervorrichtung für ein Energienetz angegeben. Die Filtervorrichtung beinhaltet eine Steuereinheit sowie eine Filterstufe mit einer induktiven Komponente, einer damit in Reihe geschalteten kapazitiven Komponente sowie einer Steuerkomponente. Die Steuereinheit ist dazu eingerichtet, vor einem Aktivieren der Filterstufe die Steuerkomponente der Filterstufe zuzuschalten, insbesondere unterbrechungslos, also ohne Trennung der Filterstufe von dem Energienetz, danach die Filterstufe zu aktivieren und nach dem Aktivieren der Filterstufe die Steuerkomponente von der Filterstufe zu trennen.

Erfindungsgemäß umfasst die Steuerkomponente eine weitere kapazitive Komponente, insbesondere parallel zur kapazitiven Komponente angeordnet, eine weitere induktive Komponente, insbesondere in Reihe zur induktiven Komponente angeordnet, oder eine Widerstandskomponente, beispielsweise einen ohmschen Widerstand, insbesondere in Reihe zur induktiven Komponente angeordnet.

Erfindungsgemäß ist die Steuereinheit dazu eingerichtet, nach dem Trennen der Steuerkomponente von der Filterstufe, die Netzspannung und einen Filterstrom zu erfassen, aus der Netzspannung und dem Filterstrom eine Kapazität der Filterstufe zu bestimmen und abhängig von der Kapazität der Filterstufe die Steuerkomponente der Filterstufe zuzuschalten.

Bei der Aktivierung der Filterstufe ist eine Resonanzfrequenz der Filterstufe definiert beispielsweise durch eine Induktivität der induktiven Komponente, eine Kapazität der kapazitiven Komponente und eine Kenngröße der Steuerkomponente, insbesondere eine Kapazität eine Induktivität oder einen elektrischen Widerstand der Steuerkomponente. Die Resonanzfrequenz ist dabei verschieden von, insbesondere niedriger als, die Abstimmfrequenz einer der Filterstufe zugeordneten, zu dämpfenden Oberschwingung. Durch diese Verstimmung fließt beim Aktivieren nur ein relativ geringer Einschaltstrom. Nach dem Aktivieren, insbesondere nach dem Abklingen transienter Einschaltströme, wird die Resonanzfrequenz durch das Trennen der Steuerkomponente von der Filterstufe näher an die Abstimmfrequenz geführt, die Verstimmung also reduziert, um die Filterwirkung entsprechend auf ein erwünschtes Maß zu bringen.

Auf diese Weise wird zum einen vermieden, dass die induktive Komponente durch zu hohe Einschaltströme in Sättigung getrieben wird, zum anderen wird eine ausreichende Filterwirkung sichergestellt. Insbesondere kann durch das verbesserte Konzept auf eine Überdimensionierung der induktiven Komponente verzichtet werden. Dies ist insbesondere dann vorteilhaft, wenn in dem Energienetz mehrere parallele Filtervorrichtungen verteilt sind und unabhängig voneinander geregelt oder eingeschaltet werden müssen. Ohne das verbesserte Konzept könnten diese nach dem Einschalten sofort überlastet werden.

Gemäß wenigstens einer Ausführungsform umfasst das Aktivieren der Filterstufe ein Verbinden der Filterstufe mit dem Energienetz oder einer Phase des Energienetzes.

Gemäß wenigstens einer Ausführungsform ist die Steuereinheit dazu eingerichtet, die Steuerkomponente zu einem vordefinierten Zeitpunkt nach dem Aktivieren der Filterstufe von der Filterstufe zu trennen. Der vordefinierte Zeitpunkt ist beispielsweise definiert durch eine Abklingzeit nach der die transienten Einschaltströme abgeklungen oder im Wesentlichen abgeklungen sind. Die Abklingzeit kann beispielsweise vorab bestimmt, berechnet, gemessen oder abgeschätzt werden.

Gemäß wenigstens einer Ausführungsform ist die Steuereinheit dazu eingerichtet, die Abklingzeit einer elektrischen Filterkenngröße der Filtervorrichtung zu bestimmen und die Steuerkomponente nach der Aktivierung und nach Ablauf der Abklingzeit von der Filterstufe zu trennen.

Gemäß zumindest einer Ausführungsform umfasst die Filterstufe eine regelbare Drossel. Die induktive Komponente und die weitere induktive Komponente sind Bestandteile, beispielsweise Wicklungsteile, der regelbaren Drossel. Insbesondere entspricht die induktive Komponente einer Stammwicklung der regelbaren Drossel und die weitere induktive Komponente einer Regelwicklung oder einem Teil einer Regelwicklung der regelbaren Drossel.

Gemäß zumindest einer Ausführungsform umfasst die regelbare Drossel eine Schaltanordnung zum unterbrechungslosen Zu- oder Abschalten der Regelwicklung oder des Teils der Regelwicklung zu beziehungsweise von der Stammwicklung.

Gemäß zumindest einer Ausführungsform umfasst die Schalteranordnung ein oder mehrere Schütze, einen oder mehrere Leistungsschalter und/oder einen Laststufenschalter.

Gemäß zumindest einer Ausführungsform weist das Energienetz mindestens zwei Phasen auf.

Gemäß zumindest einer Ausführungsform sind die induktive Komponente und die erste kapazitive Komponente zwischen dem Energienetz, insbesondere einer Phase des Energienetzes, und einem Sternpunkt der Filtervorrichtung in Reihe geschaltet.

Gemäß zumindest einer Ausführungsform sind die induktive Komponente und die erste kapazitive Komponente zwischen zwei der mindestens zwei Phasen des Energienetzes geschaltet.

Gemäß zumindest einer Ausführungsform ist die Steuereinheit dazu eingerichtet, nach dem Trennen der Steuerkomponente von der Filterstufe wenigstens eine elektrische Netzkenngröße des Energienetzes und wenigstens eine elektrische Filterkenngröße zu erfassen, basierend auf der wenigstens einen Netzkenngröße und der wenigstens einen Filterkenngröße wenigstens eine elektrische Lastkenngröße zu bestimmen und, abhängig von der wenigstens einen Lastkenngröße, die Steuerkomponente der Filterstufe zuzuschalten.

Gemäß zumindest einer Ausführungsform umfasst die wenigstens eine Netzkenngröße eine Amplitude oder eine Phase einer Netzspannung oder eines Netzstromes.

Gemäß zumindest einer Ausführungsform umfasst die wenigstens eine Filterkenngröße eine Amplitude oder eine Phase eines Filterstroms oder einer Filterspannung.

Gemäß zumindest einer Ausführungsform ist die Steuereinheit dazu eingerichtet, die wenigstens eine Lastkenngröße basierend auf einem Amplitudenvergleich oder einem Phasenvergleich zwischen der wenigstens eine Netzkenngröße und der wenigstens eine Filterkenngröße zu bestimmen.

Gemäß zumindest einer Ausführungsform umfasst die wenigstens eine Lastkenngröße eine Amplitude oder Phase eines scheinbaren Laststroms oder einer scheinbaren Lastspannung.

Erfindungsgemäß wird auch ein Filternetzwerk für ein Energienetz angegeben. Das Filternetzwerk umfasst wenigstens zwei erfindungsgemäße Filtervorrichtungen.

Erfindungsgemäß wird auch ein Verfahren zum Betrieb einer Filtervorrichtung für ein Energienetz angegeben. Die Filtervorrichtung umfasst eine Filterstufe mit einer induktiven Komponente, einer damit in Reihe geschalteten kapazitiven Komponente und einer Steuerkomponente, wobei die Steuerkomponente zumindest eine weitere kapazitive Komponente oder zumindest eine weitere induktive Komponente oder zumindest eine Widerstandskomponente umfasst. Insbesondere ist die Filtervorrichtung als erfindungsgemäße Filtervorrichtung ausgebildet. Das Verfahren beinhaltet ein Zuschalten einer Steuerkomponente zu der Filterstufe vor einem Aktivieren der Filterstufe, das Aktivieren der Filterstufe und ein Trennen der Steuerkomponente von der Filterstufe nach dem Aktivieren der Filterstufe. Das Verfahren beinhaltet zudem, nach dem Trennen der Steuerkomponente von der Filterstufe, das Erfassen einer Netzspannung und eines Filterstroms, das Bestimmen einer Kapazität der Filterstufe aus der Netzspannung und dem Filterstrom und das Zuschalten der Steuerkomponente abhängig von der Kapazität der Filterstufe.

Weitere Ausgestaltungsformen und Implementierungen des Verfahrens ergeben sich unmittelbar aus den verschiedenen Ausgestaltungsformen der Filtervorrichtung. Insbesondere können einzelne oder mehrere der bezüglich des Verfahrens beschriebenen Komponenten und/oder Anordnungen zur Durchführung des Verfahrens entsprechend implementiert sein.

Im Folgenden wird die Erfindung anhand beispielhafter Ausführungsformen unter Bezug auf die Zeichnungen im Detail erklärt. Komponenten, die identisch oder funktionell identisch sind oder einen identischen Effekt haben, können mit identischen Bezugszeichen versehen sein. Identische Komponenten oder Komponenten mit identischer Funktion sind unter Umständen nur bezüglich der Figur erklärt, in der sie zuerst erscheinen. Die Erklärung wird nicht notwendigerweise in den darauffolgenden Figuren wiederholt.

Es zeigen
- Figur 1a: eine beispielhafte Ausführungsform einer Filtervorrichtung nach dem verbesserten Konzept;
- Figur 1b: eine beispielhafte Ausführungsform einer Filtervorrichtung nach dem verbesserten Konzept;
- Figur 1c: eine beispielhafte Ausführungsform einer Filtervorrichtung nach dem verbesserten Konzept; und
- Figur 2: eine weitere beispielhafte Ausführungsform einer Filtervorrichtung nach dem verbesserten Konzept.

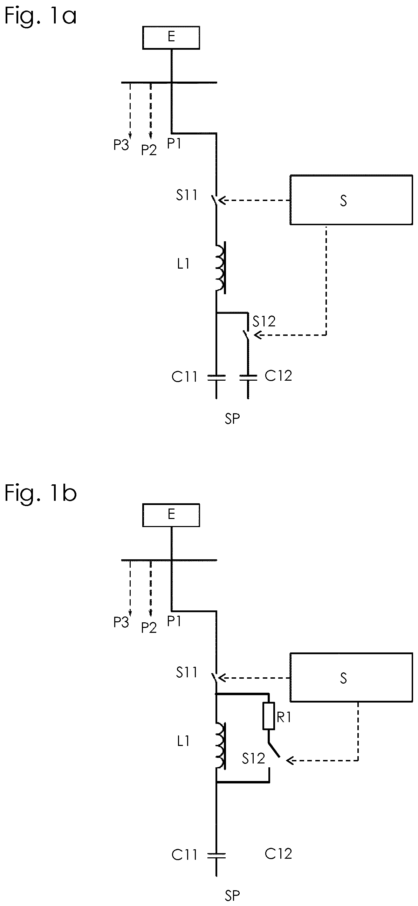

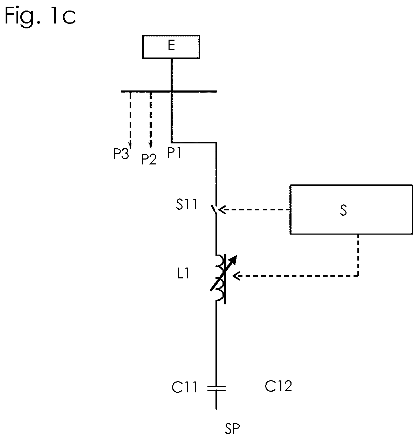

Figur 1α zeigt eine beispielhafte Ausführungsform einer Filtervorrichtung nach dem verbesserten Konzept mit einer Filterstufe.

Die Filterstufe umfasst eine induktive Komponente L1, insbesondere Drossel, welche über einen Schalter S11 mit einer ersten Phase P1 eines Energienetzes E verbunden ist, welches beispielsweise weitere Phasen P2, P3 aufweisen kann. Die Filterstufe beziehungsweise ihre Komponenten sind derart ausgelegt, dass sie eine vorbestimmte Oberschwingung des Energienetzes E dämpfen kann. Die Filterstufe umfasst außerdem eine erste kapazitive Komponente C11, welche in Reihe zwischen der induktiven Komponente L1 und einem Sternpunkt SP, also einem Neutralpunkt, der Filtervorrichtung angeordnet ist. Alternativ kann die erste kapazitive Komponente C11 in Reihe zwischen der induktiven Komponente L1 und einer der weiteren Phasen P2, P3 geschaltet sein. Des Weiteren umfasst die Filterstufe eine Steuerkomponente, beispielsweise eine zweite kapazitive Komponente C12, welche über einen Schalter S12 parallel zu der ersten kapazitiven Komponente C1 1 schaltbar ist. Die Filtervorrichtung weist außerdem eine Steuereinheit S auf.

Im Normalbetrieb ist der Schalter S11 geschlossen und der Schalter S12 beispielsweise geöffnet und die zweite kapazitive Komponente C12 daher von der Filterstufe getrennt. Eine Resonanzfrequenz der Filterstufe ist dann gegeben durch die Induktivität der induktiven Komponente L1 und die Kapazität der ersten kapazitiven Komponente C11. Diese sind derart dimensioniert, dass die Filterstufe im Vergleich zu der zu dämpfenden Oberschwingung leicht verstimmt ist, insbesondere etwas niedriger ist als die Frequenz der Oberschwingung, also die Abstimmfrequenz. Dadurch wird eine zu hohe Leistungsaufnahme der Filterstufe und damit eine entsprechende Überlastung der induktiven oder kapazitiven Komponenten der Filterstufe vermieden.

Ist die Filterstufe deaktiviert, ist der Schalter S11 geöffnet und damit die Filterstufe vom Energienetz E getrennt.

Soll die Filterstufe aktiviert werden, schließt die Steuereinheit S, bevor sie den Schalter S11 schließt, den Schalter S12, um die zweite kapazitive Komponente C12 zuzuschalten. Durch die resultierende Vergrößerung der Gesamtkapazität der Filterstufe und eine entsprechende Verkleinerung der Resonanzfrequenz wird die Verstimmung der Filterstufe gegen die Abstimmfrequenz erhöht. Wird die Filterstufe nun durch Schließen des Schalters S11 mittels der Steuereinheit S aktiviert, führt dies zu verringerten Einschaltströmen und verringerter Leistungsaufnahme der Filterstufe. Damit wird verhindert, dass die Drossel L1 in Sättigung geht. Nachdem die transienten Einschaltströme abgeklungen sind und daher keine Gefahr der Sättigung der Drossel L1 mehr besteht, öffnet die Steuereinheit S den Schalter S12 wieder um die Verstimmung zu reduzieren und die Filterwirkung auf das gewünschte Maß einzustellen.

Die Steuereinheit S ist mit dem Energienetz E und der Filterstufe über entsprechende Messeinheiten (nicht gezeigt) gekoppelt um einen Filterstrom und optional einen Netzstrom zu erfassen oder zu überwachen. Im Laufe des Betriebs kann sich der Abstand zwischen Resonanzfrequenz und Abstimmfrequenz verändern. Dies kann beispielsweise durch alterungsbedingte Änderungen der Kapazität der ersten kapazitiven Komponente C11 und/oder der Induktivität der induktiven Komponente L1 versursacht werden. Eine andere Ursache können Schwankungen im Energienetz E sein. Dadurch kann es zu einer erhöhten Leistungsaufnahme der Filterstufe und schließlich auch zu einer unerwünschten Verstärkung der Oberschwingung anstelle der erwünschten Dämpfung kommen. Die Steuereinheit S kann im Betrieb der Filtervorrichtung die Ströme insbesondere kontinuierlich erfassen und basierend darauf einen resultierenden virtuellen oder scheinbaren Laststrom bestimmen. Insbesondere wertet die Steuereinheit S dazu die Amplituden und/oder Phasen der Ströme aus, insbesondere derjenigen Frequenzanteile der Ströme die der zu dämpfenden Oberschwingung entsprechen. Die Steuereinheit S kann abhängig von dem scheinbaren Laststrom den Schalter S12 betätigen und so die zweite kapazitive Komponente C12 der Filterstufe zuschalten. Insbesondere kann dies erfolgen, wenn der scheinbare Laststrom einen Schwellwert übersteigt, insbesondere wenn die Amplitude des scheinbaren Laststroms die Amplitude des Filterstroms IF übersteigt. Letzteres indiziert beispielsweise eine Verstärkung der Oberschwingung.

Erfindungsgemäß bestimmt die Steuereinheit S aus der Netzspannung UN und dem Filterstrom IF eine Kapazität der Filterstufe. Die Steuereinheit S betätigt abhängig von der Kapazität der Filterstufe den Schalter S12 r und schaltet so die zweite kapazitive Komponente C12 der Filterstufe zu. Insbesondere kann dies erfolgen, wenn die Kapazität einen Schwellwert unterschreitet. Letzteres indiziert beispielsweise eine signifikante Alterung oder eine Beschädigung der kapazitiven Komponente C11.

Durch die resultierende Vergrößerung der Gesamtkapazität der Filterstufe und eine entsprechende Verkleinerung der Resonanzfrequenz wird die Verstimmung der Filterstufe gegen die Abstimmfrequenz wieder erhöht, die Leistungsaufnahme der Filterstufe verringert und die Verstärkung der Oberschwingung weicht gegebenenfalls wieder einer Dämpfung wie erwünscht.

Alternativ oder zusätzlich kann die Resonanzfrequenz auch durch Zuschalten einer zweiten induktiven Komponente (siehe Figur 1c) und oder eines Widerstands (siehe Figur 1b) zu der Filterstufe verkleinert werden.

Liegt die Bedingung zur Zuschaltung der zweiten kapazitiven Komponente C12 nicht mehr vor, kann die Steuereinheit S den Schalter S12 öffnen um die zweite kapazitive Komponente C12 von der Filterstufe zu trennen.

Alternativ oder zusätzlich kann die zweite kapazitive Komponente C12 von der Filterstufe getrennt werden, wenn die Filterwirkung der Filterstufe nicht ausreicht um eine ausreichend starke Dämpfung der Oberschwingung zu erzielen.

Figur 1b zeigt eine weitere beispielhafte Ausführungsform einer Filtervorrichtung nach dem verbesserten Konzept, welche auf der Ausführungsform der Figur 1a basiert.

An die Stelle der zweiten kapazitiven Komponente C12 tritt in Figur 1b ein ohmscher Widerstand, welcher über den Schalter S12 parallel zu der induktiven Komponente L1 zugeschaltet werden kann.

Darüber hinaus ist Funktionalität der Vorrichtung analog zu der bezüglich Figur 1a beschriebenen.

Figur 1c zeigt eine weitere beispielhafte Ausführungsform einer Filtervorrichtung nach dem verbesserten Konzept, welche auf der Ausführungsform der Figur 1a basiert.

Statt wie in Figur 1a die zweite kapazitive Komponente C12 über den Schalter S12 zuzuschalten oder zu trennen, kann hier die Induktivität der induktiven Komponente L1 unterbrechungslos verändert werden. Dazu ist die induktive Komponente L1 als regelbare Drossel ausgeführt.

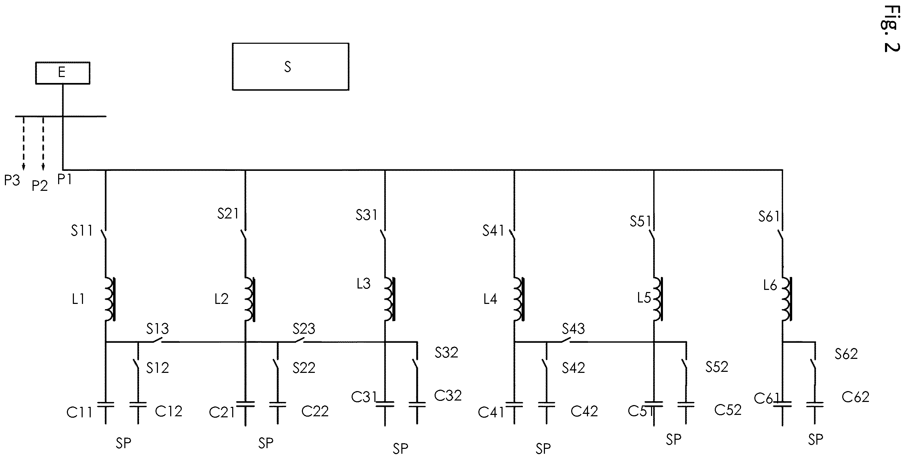

Darüber hinaus ist Funktionalität der Vorrichtung analog zu der bezüglich Figur 1a beschriebenen.Figur 2 zeigt eine weitere beispielhafte Ausführungsform einer Filtervorrichtung nach dem verbesserten Konzept, welche auf der Ausführungsform der Figur 1a basiert.

Die induktive Komponente L1 und die kapazitiven Komponenten C11, C12 stellen eine erste Gruppe der Filterstufe (im Folgenden "erste Filterstufe") dar. Im Beispiel der Figur 2 weist die erste Filterstufe zudem eine zweite Gruppe mit einer induktiven Komponente L2 sowie zwei kapazitiven Komponenten C21, C22 und einen Schalter S22 auf, welche genau wie die Komponenten der ersten Gruppe zwischen der ersten Phase P1 und dem Sternpunkt SP geschaltet sind. Dasselbe gilt für eine dritte Gruppe der ersten Filterstufe mit induktiver Komponente L3, zwei kapazitiven Komponenten C31, C32 und einem Schalter S32.

Die erste Filterstufe kann beispielsweise einen Schalter S13 aufweisen, welcher zwischen induktiver Komponente L1 und kapazitiven Komponenten C11, C12 mit der ersten Gruppe und zwischen induktiver Komponente L2 und kapazitiven Komponenten C21, C22 mit der zweiten Gruppe verbunden ist. Die erste Filterstufe kann beispielsweise einen Schalter S23 aufweisen, welcher zwischen induktiver Komponente L2 und kapazitiven Komponenten C21, C22 mit der zweiten Gruppe und zwischen induktiver Komponente L3 und kapazitiven Komponenten C31, C32 mit der zweiten Gruppe verbunden ist.

Durch die zweite und dritte Gruppe können die Gesamtkapazität und die Gesamtinduktivität und somit die Resonanzfrequenz der ersten Filterstufe entsprechend dem konkreten Anwendungsfall angepasst werden.

Die Steuereinheit ist dazu eingerichtet, die Schalter S22 und S32 gleichzeitig mit dem Schalter S12 zu betätigen. Auf die Funktionalität der ersten Filterstufe wird daher auf die Ausführungen zu Figur 1a verwiesen.

Die Filtervorrichtung kann beispielsweise eine zweite Filterstufe aufweisen. Die zweite Filterstufe weist eine erste Gruppe von induktiven und kapazitiven Komponenten sowie Schaltern L4, C41, C42, S42, S43 und eine zweite Gruppe von induktiven und kapazitiven Komponenten sowie Schaltern L5, C51, C52, S52 auf. Die beiden Gruppen der zweiten Filterstufe sind strukturell identisch zu der ersten und zweiten Gruppe der ersten Filterstufe aufgebaut. Die einzelnen Kapazitäts- und Induktivitätswerte in der zweiten Filterstufe können jedoch verschieden von denen der ersten Filterstufe sein um eine andere Oberschwingung zu dämpfen.

Die Steuereinheit kann die Schalter S42, S52 analog zu den entsprechenden Schaltern der ersten Filterstufe betätigen. Auf die Funktionalität der zweiten Filterstufe wird daher auf die Ausführungen zu Figur 1a verwiesen.

Die Filtervorrichtung kann beispielsweise eine dritte Filterstufe aufweisen. Die dritte Filterstufe weist eine Gruppe von induktiven und kapazitiven Komponenten sowie Schaltern L6, C61, C62, S62 auf. Die Gruppe der dritten Filterstufe ist strukturell identisch zu der ersten Gruppe der ersten Filterstufe aufgebaut. Die einzelnen Kapazitäts- und Induktivitätswerte in der dritten Filterstufe können jedoch verschieden von denen der ersten Filterstufe sein um wiederum eine andere Oberschwingung zu dämpfen.

Die Steuereinheit kann den Schalter S62 analog zu den entsprechenden Schaltern der ersten Filterstufe betätigen. Auf die Funktionalität der dritten Filterstufe wird daher auf die Ausführungen zu Figur 1a verwiesen.

### Bezugszeichen

E Energienetz
S Steuereinheit
P1, P2, P3 Phasen
S11, S12, S13, S21, S22, S23 Schalter
S31,S32,S41,S42,S43,S51, S52,S61,S62 L1,L2,L3,L4,L5,L6 induktive Komponenten
C11, C12, C21, C22, C31, C32 kapazitive Komponenten
C41, C42, C51, C52, C61, C62 R1 Widerstand

## Patentansprüche

1. Filtervorrichtung für ein Energienetz, die Filtervorrichtung umfassend
- eine Filterstufe mit einer induktiven Komponente (L1), einer damit in Reihe geschalteten kapazitiven Komponente (C1 1) und einer Steuerkomponente (C12); wobei die Steuerkomponente (C12) zumindest eine weitere kapazitive Komponente oder zumindest eine weitere induktive Komponente oder zumindest eine Widerstandskomponente umfasst; und
- einer Steuereinheit (S) dazu eingerichtet,
- die Filterstufe zu aktivieren;
- vor dem Aktivieren der Filterstufe die Steuerkomponente (C12) der Filterstufe zuzuschalten; und
- nach dem Aktivieren der Filterstufe die Steuerkomponente (C12) von der Filterstufe zu trennen;
**dadurch gekennzeichnet, dass**
die Steuereinheit (S) dazu eingerichtet ist, nach dem Trennen der Steuerkomponente (C12) von der Filterstufe,
- die Netzspannung, UN, und einen Filterstrom, IF, zu erfassen
- aus der Netzspannung, UN, und dem Filterstrom, IF, eine Kapazität der Filterstufe zu bestimmen und
- abhängig von der Kapazität der Filterstufe die Steuerkomponente (C12) der Filterstufe zuzuschalten.

2. Filtervorrichtung nach Anspruch 1, wobei die Steuereinheit (S) dazu eingerichtet ist, die Steuerkomponente (C12) zu einem vordefinierten Zeitpunkt nach dem Aktivieren der Filterstufe von der Filterstufe zu trennen.

3. Filtervorrichtung nach Anspruch 1, wobei die Steuereinheit (S) dazu eingerichtet ist, eine Abklingzeit einer elektrischen Filterkenngröße zu bestimmen und die Steuerkomponente (C12) nach Ablauf der Abklingzeit von der Filterstufe zu trennen.

4. Filtervorrichtung nach Anspruch 1, wobei die Steuerkomponente die weitere induktive Komponente umfasst, wobei die Filterstufe eine regelbare Drosse enthält, welche die induktive Komponente (L1) und die weitere induktive Komponente enthält.

5. Filtervorrichtung nach einem der Ansprüche 1 bis 4, wobei das Energienetz (E) mindestens zwei Phasen (P1, P2, P3) aufweist und die induktive Komponente (L1) und die kapazitive Komponente (C11) zwischen dem Energienetz (E) und einem Sternpunkt (SP) der Filtervorrichtung in Reihe geschaltet sind.

6. Filtervorrichtung nach einem der Ansprüche 1 bis 5, wobei die Steuereinheit (S) dazu eingerichtet ist, nach dem Trennen der Steuerkomponente (S) von der Filterstufe
- wenigstens eine elektrische Netzkenngröße des Energienetzes (E) und wenigstens eine elektrische Filterkenngröße zu erfassen;
- basierend auf der wenigstens einen Netzkenngröße und der wenigstens einen Filterkenngröße wenigstens eine elektrische Lastkenngröße zu bestimmen; und
- abhängig von der wenigstens einen Lastkenngröße die Steuerkomponente (C12) der Filterstufe zuzuschalten.

7. Filtervorrichtung nach Anspruch 6, wobei die wenigstens eine Netzkenngröße eine Amplitude oder eine Phase einer Netzspannung oder eines Netzstromes umfasst.

8. Filtervorrichtung nach einem der Ansprüche 6 oder 7, wobei die wenigstens eine Filterkenngröße eine Amplitude oder eine Phase eines Filterstroms oder einer Filterspannung umfasst.

9. Filtervorrichtung nach einem der Ansprüche 6 bis 8, wobei die Steuereinheit (S) dazu eingerichtet ist, die wenigstens eine Lastkenngröße basierend auf einem Amplitudenvergleich oder einem Phasenvergleich zwischen der wenigstens einen Netzkenngröße und der wenigstens einen Filterkenngröße zu bestimmen.

10. Filtervorrichtung nach einem der Ansprüche 6 bis 9, wobei die wenigstens eine Lastkenngröße eine Amplitude oder Phase eines scheinbaren Laststroms oder einer scheinbaren Lastspannung umfasst.

11. Filternetzwerk für ein Energienetz, das Filternetzwerk umfassend wenigstens zwei Filtervorrichtungen welche jeweils nach einem der Ansprüche 1 bis 10 ausgebildet sind.

12. Verfahren zum Betrieb einer Filtervorrichtung für ein Energienetz, die Filtervorrichtung umfassend eine Filterstufe mit einer induktiven Komponente (L1), einer damit in Reihe geschalteten kapazitiven Komponente (C11) und einer Steuerkomponente (C12), wobei die Steuerkomponente (C12) zumindest eine weitere kapazitive Komponente oder zumindest eine weitere induktive Komponente oder zumindest eine Widerstandskomponente umfasst, wobei das Verfahren folgende Schritte beinhaltet:
- Zuschalten einer Steuerkomponente (C12) zu der Filterstufe vor einem Aktivieren der Filterstufe;
- Aktivieren der Filterstufe; und
- Trennen der Steuerkomponente (C12) von der Filterstufe nach dem Aktivieren der Filterstufe;
**gekennzeichnet durch**,
nach dem Trennen der Steuerkomponente (C12) von der Filterstufe,
- Erfassen einer Netzspannung, UN, und eines Filterstroms, IF,
- Bestimmen einer Kapazität der Filterstufe aus der Netzspannung, UN, und dem Filterstrom, IF, und
- Zuschalten der Steuerkomponente (C12) abhängig von der Kapazität der Filterstufe.

## Claims

1. Filter device for an energy grid, the filter device comprising
- a filter stage with an inductive component (L1), a capacitive component (C11) connected in series therewith, and a control component (C12); wherein the control component (C12) comprises at least one further capacitive component or at least one further inductive component or at least one resistance component; and
- a control unit (S) configured
- to activate the filter stage;
- to connect the control component (C12) to the filter stage before activation of the filter stage; and
- to disconnect the control component (C12) from the filter stage after activation of the filter stage;
**characterized in that** the control unit (S) is configured,
- after disconnection of the control component (C12) from the filter stage,
- to capture the grid voltage, UN, and a filter current, IF,
- to determine a capacitance of the filter stage from the grid voltage, UN, and the filter current, IF, and
- to connect the control component (C12) to the filter stage depending on the capacitance of the filter stage.

2. Filter device according to Claim 1, wherein the control unit (S) is configured to disconnect the control component (C12) from the filter stage at a predefined time after activation of the filter stage.

3. Filter device according to Claim 1, wherein the control unit (S) is configured to determine a decay time of an electrical filter characteristic variable and to disconnect the control component (C12) from the filter stage when the decay time has elapsed.

4. Filter device according to Claim 1, wherein the control component comprises the further inductive component, wherein the filter stage contains a regulatable reactor that contains the inductive component (L1) and the further inductive component.

5. Filter device according to one of Claims 1 to 4, wherein the energy grid (E) has at least two phases (P1, P2, P3), and the inductive component (L1) and the capacitive component (C11) are connected in series between the energy grid (E) and a neutral point (SP) of the filter device.

6. Filter device according to one of Claims 1 to 5, wherein the control unit (S) is configured, after disconnection of the control component (S) from the filter stage,
- to capture at least one electrical grid characteristic variable of the energy grid (E) and at least one electrical filter characteristic variable;
- to determine at least one electric load characteristic variable on the basis of the at least one grid characteristic variable and the at least one filter characteristic variable; and
- to connect the control component (C12) to the filter stage depending on the at least one load characteristic variable.

7. Filter device according to Claim 6, wherein the at least one grid characteristic variable comprises an amplitude or a phase of a grid voltage or of a grid current.

8. Filter device according to either of Claims 6 and 7, wherein the at least one filter characteristic variable comprises an amplitude or a phase of a filter current or of a filter voltage.

9. Filter device according to one of Claims 6 to 8, wherein the control unit (S) is configured to determine the at least one load characteristic variable on the basis of an amplitude comparison or a phase comparison between the at least one grid characteristic variable and the at least one filter characteristic variable.

10. Filter device according to one of Claims 6 to 9, wherein the at least one load characteristic variable comprises an amplitude or phase of an apparent load current or of an apparent load voltage.

11. Filter network for an energy grid, the filter network comprising at least two filter devices that are each designed according to one of Claims 1 to 10.

12. Method for operating a filter device for an energy grid, the filter device comprising a filter stage with an inductive component (L1), a capacitive component (C11) connected in series therewith, and a control component (C12), wherein the control component (C12) comprises at least one further capacitive component or at least one further inductive component or at least one resistance component,
wherein the method includes the following steps:
- connecting a control component (C12) to the filter stage before activation of the filter stage;
- activating the filter stage; and
- disconnecting the control component (C12) from the filter stage after activation of the filter stage;
**characterized by**
- after disconnection of the control component (C12) from the filter stage,
- capturing a grid voltage, UN, and a filter current, IF,
- determining a capacitance of the filter stage from the grid voltage, UN, and the filter current, IF, and
- connecting the control component (C12) depending on the capacitance of the filter stage.

## Revendications

1. Dispositif filtrant pour un réseau d'énergie, le dispositif filtrant comprenant :
- un étage filtrant comprenant un composant inductif (L1), un composant capacitif (C11) branché en série avec celui-ci et un composant de commande (C12) ; le composant de commande (C12) comportant au moins un composant capacitif supplémentaire ou au moins un composant inductif supplémentaire ou au moins un composant résistif ; et
- une unité de commande (S), conçue pour
- activer l'étage filtrant ;
- mettre en circuit le composant de commande (C12) de l'étage filtrant avant l'activation de l'étage filtrant ; et
- déconnecter le composant de commande (C12) de l'étage filtrant après l'activation de l'étage filtrant ; **caractérisé en ce que**
l'unité de commande (S) est conçue pour
- après la déconnexion du composant de commande (C12) de l'étage filtrant,
- acquérir la tension de réseau, UN, et un courant de filtre, IF,
- déterminer une capacité de l'étage filtrant à partir de la tension de réseau, UN, et du courant de filtre, IF, et
- mettre en circuit le composant de commande (C12) de l'étage filtrant en fonction de la capacité de l'étage filtrant.

2. Dispositif filtrant selon la revendication 1, l'unité de commande (S) étant conçue pour déconnecter le composant de commande (C12) de l'étage filtrant à un instant prédéfini après l'activation de l'étage filtrant.

3. Dispositif filtrant selon la revendication 1, l'unité de commande (S) étant conçue pour déterminer une durée de décroissance d'une grandeur caractéristique de filtre et déconnecter le composant de commande (C12) de l'étage filtrant après écoulement de la durée de décroissance.

4. Dispositif filtrant selon la revendication 1, le composant de commande comportant le composant inductif supplémentaire, l'étage filtrant contenant une bobine de choc régulable, laquelle contient le composant inductif (L1) et le composant inductif supplémentaire.

5. Dispositif filtrant selon l'une des revendications 1 à 4, le réseau d'énergie (E) possédant au moins deux phases (P1, P2, P3) et le composant inductif (L1) et le composant capacitif (C11) étant branchés en série entre le réseau d'énergie (E) et un point neutre (SP) du dispositif filtrant.

6. Dispositif filtrant selon l'une des revendications 1 à 5, l'unité de commande (S) étant conçue pour, après la déconnexion du composant de commande (S) de l'étage filtrant,
- acquérir au moins une grandeur caractéristique de réseau électrique du réseau d'énergie (E) et au moins une grandeur caractéristique de filtre électrique ;
- en se basant sur l'au moins une grandeur caractéristique de réseau et l'au moins une grandeur caractéristique de filtre, déterminer au moins une grandeur caractéristique de charge électrique ; et
- mettre en circuit le composant de commande (C12) de l'étage filtrant en fonction de l'au moins une grandeur caractéristique de charge.

7. Dispositif filtrant selon la revendication 6, l'au moins une grandeur caractéristique de réseau comprenant une amplitude ou une phase d'une tension de réseau ou d'un courant de réseau.

8. Dispositif filtrant selon l'une des revendications 6 ou 7, l'au moins une grandeur caractéristique de filtre comprenant une amplitude ou une phase d'un courant de filtre ou d'une tension de filtre.

9. Dispositif filtrant selon l'une des revendications 6 à 8, l'unité de commande (S) étant conçue pour déterminer l'au moins une grandeur caractéristique de charge en se basant sur une comparaison d'amplitude ou une comparaison de phase entre l'au moins une grandeur caractéristique de réseau et l'au moins une grandeur caractéristique de filtre.

10. Dispositif filtrant selon l'une des revendications 6 à 9, l'au moins une grandeur caractéristique de charge comprenant une amplitude ou une phase d'un courant de charge apparent ou d'une tension de charge apparente.

11. Réseau filtrant pour un réseau d'énergie, le réseau filtrant comportant au moins deux dispositifs filtrants, lesquels sont respectivement configurée selon l'une des revendications 1 à 10.

12. Procédé pour faire fonctionner un dispositif filtrant pour un réseau d'énergie, le dispositif filtrant comportant un étage filtrant comprenant un composant inductif (L1), un composant capacitif (C11) branché en série avec celui-ci et un composant de commande (C12), le composant de commande (C12) comportant au moins un composant capacitif supplémentaire ou au moins un composant inductif supplémentaire ou au moins un composant résistif,
le procédé comprenant les étapes suivantes :
- mise en circuit d'un composant de commande (C12) avec l'étage filtrant avant une activation de l'étage filtrant ;
- activation de l'étage filtrant ; et
- déconnexion du composant de commande (C12) de l'étage filtrant après l'activation de l'étage filtrant ;
**caractérisé par**
après la déconnexion du composant de commande (C12) de l'étage filtrant,
- acquérir une tension de réseau, UN, et un courant de filtre, IF,
- déterminer une capacité de l'étage filtrant à partir de la tension de réseau, UN, et du courant de filtre, IF, et
- mettre en circuit le composant de commande (C12) en fonction de la capacité de l'étage filtrant.
